Europäisches Patentamt

(19) European Patent Office

Office européen des brevets

(11) Publication number : **0 307 214 B1**

(12) **EUROPEAN PATENT SPECIFICATION**

(45) Date of publication of patent specification :
19.06.91 Bulletin 91/25

(21) Application number : **88308332.1**

(22) Date of filing : **09.09.88**

(51) Int. Cl.⁵ : **B60N 2/48**

(54) **Headrest for a motor vehicle.**

(30) Priority : **10.09.87 GB 8721269**

(43) Date of publication of application :
**15.03.89 Bulletin 89/11**

(45) Publication of the grant of the patent :
**19.06.91 Bulletin 91/25**

(84) Designated Contracting States :
**BE DE ES FR GB IT NL SE**

(56) References cited :
**DE-A- 2 405 774**
**DE-A- 2 726 141**
**DE-A- 2 727 987**
**DE-U- 8 620 376**
**FR-A- 2 348 800**
**GB-A- 1 023 639**

(73) Proprietor : **FORD MOTOR COMPANY LIMITED**
**Eagle Way**
**Brentwood Essex CM13 3BW (GB)**
**GB**
Proprietor : **FORD FRANCE S. A.**
**B.P. 307**
**F-92506 Rueil-Malmaison Cédex (FR)**
**FR**
Proprietor : **FORD-WERKE AKTIENGESELLSCHAFT**
**Werk Köln-Niehl Henry-Ford-Strasse Postfach 60 40 02**
**W-5000 Köln 60 (DE)**
**DE**
Proprietor : Ford Motor Company
**One Parklane Boulevard Parklane Towers East**
**Dearborn Michigan 48126 (US)**
**BE ES IT NL SE**

(72) Inventor : **Amner, John Arthur**
**6 Wheatley Close Holt Farm**
**Rochford Essex SS4 1SR (GB)**

(74) Representative : **Messulam, Alec Moses et al**
**A. Messulam & Co. 24 Broadway**
**Leigh on Sea Essex SS9 1BN (GB)**

## Description

This invention relates to a headrest for use with a motor vehicle seat.

A headrest is required for a motor vehicle seat to prevent the head of the seat occupant being jerked backwards in the event of a crash. The headrest therefore has to be rigid enough to restrain movement of the head, but at the same time it needs to have energy absorbing characteristics to prevent damage to the head, and also needs to be relatively soft and comfortable for use by the seat occupant under normal driving conditions.

Both headrests and head restraints are known. For the purposes of this specification, head restraints are fixed structures attached to a seat back and intended to prevent neck injury in an accident. In some cases, head restraints may be able to move vertically. Headrests on the other hand, while having a primary function in preventing neck injuries, also aim to improve the comfort of the seat occupant and are able to tilt about a horizontal axis as well as being able to move up and down.

DE-U-8 620 376 corresponding to the preamble of claim 1 describes a headrest construction where a D-shaped plastics frame has clamps for two support rods, and where a foam covering is fitted around the frame. The foam is resilient and will therefore absorb energy when it is contacted by the head of a seat occupant in a crash. However, the centre part of the headrest is substantially rigid and has no other energy absorbing properties.

According to the present invention, there is provided a headrest for use with a motor vehicle seat, the headrest comprising a plastics body including a mounting insert mounted into a recess of the body, a support frame, at least one friction clamp adapted to hold the body relative to the frame whilst allowing the insert and the body to tilt relative to the frame to an extent limited by walls of the recess, and the body being covered with a layer of covering material, characterised in that the plastics body is a blowmoulded body froming a continuous envelope bounding an enclosed cavity with the mounting insert moulded into the recess which is arranged in wall of the lower face of the body.

The support frame is preferably made of rod or bar suitably bent to shape. There are preferably two moulded-in inserts and two friction clamps. In one embodiment, the friction clamps may themselves be moulded into the plastics body. In another embodiment, the insert has a threaded bore, and the clamps can be secured to the inserts by threaded fasteners.

The recess preferably has faces which make an angle of between 50° and 60° to one another, to limit the available tilting movement of the body on the frame.

The plastics body may be blown from a parison which is precoated with an adhesive coating, so that a layer of foam or other covering can be secured to the outer surface of the body after moulding. Alternatively, the adhesive may be provided in a granular form and can be mixed with the plastics material prior to blow moulding.

The plastics body is preferably generally cylindrical in shape and is supported with its longitudinal axis horizontal.

The invention will now be further described, by way of example, with reference to the accompanying drawings, in which :

Figure 1 is a perspective view from below of a headrest in accordance with the invention ;

Figure 2 is a cross section through the headrest of Figure 1 ;

Figure 3 is a detail of one of the clamps used in the embodiments of Figures 1 and 2 ;

Figure 4 is a side view of a second embodiment of headrest in accordance with the invention ; and

Figure 5 shows the plastics body from Figure 4 separated from the other parts ; and

Figure 6 is a view on the body of Figure 5 in the direction of an arrow A.

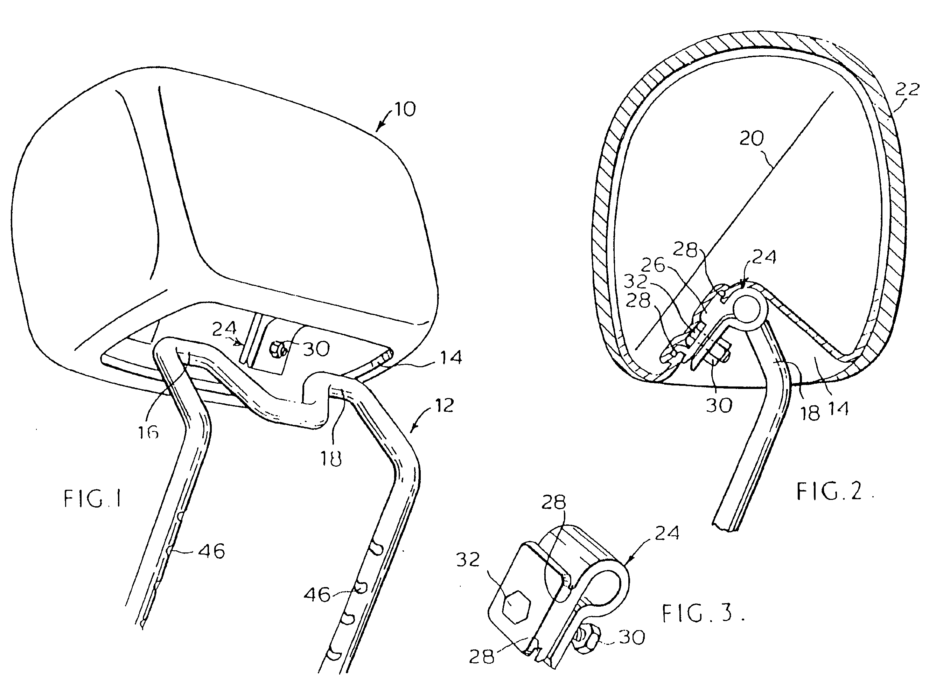

Fig 1 shows a headrest comprising a blow moulded plastics body 10 and a bent steel rod support frame 12. The lower face of the body 10 has a recess 14, and the uppermost ends of the frame 12 at 16 and 18 project into this recess where they are held by clamps in the manner shown in Fig 2.

Fig 2 shows a section through the blow-moulded body which is hollow. The mould parting line is indicated at 20. The body may be of high density polyethylene or polypropylene. On the outside surface of the body 10, a self adhesive film is applied, and a covering material 22 which may be polyurethane foam, is stuck to this film. The film can be applied to the parison before it is blown, and the film is therefore capable of stretching as the blowing process takes place. Typically the wall thickness of the blow moulded body 10 will be 2-2.5 mm, and this will be covered by a moulded in situ layer of foam which adheres to the body 10 and has a thickness of about 15 mm. A cut and sewn cover can then be fitted over the foam to match the interior trim of the vehicle.

In the recess 14 are two P-clamps 24 one of which is shown in detail in Fig 3. The clamp has a boss 26 with undercuts 28 and is positioned in the mould so that it is incorporated in the skin of blow-moulded body as indicated in Fig 2. A nut 30 on a bolt 32 can be tightened to grip the support frame 12 to provide a friction clamping action. The nut 30 can be tightened or released to vary the amount of friction applied.

As can been seen in Fig 2, the top end of the frame 12 is cranked and the part of the frame which enters the recess 14 is straight. This part co-operates with the walls 34 and 36 of the recess to define the amount of tilting movement about the axis of the frame part 16.

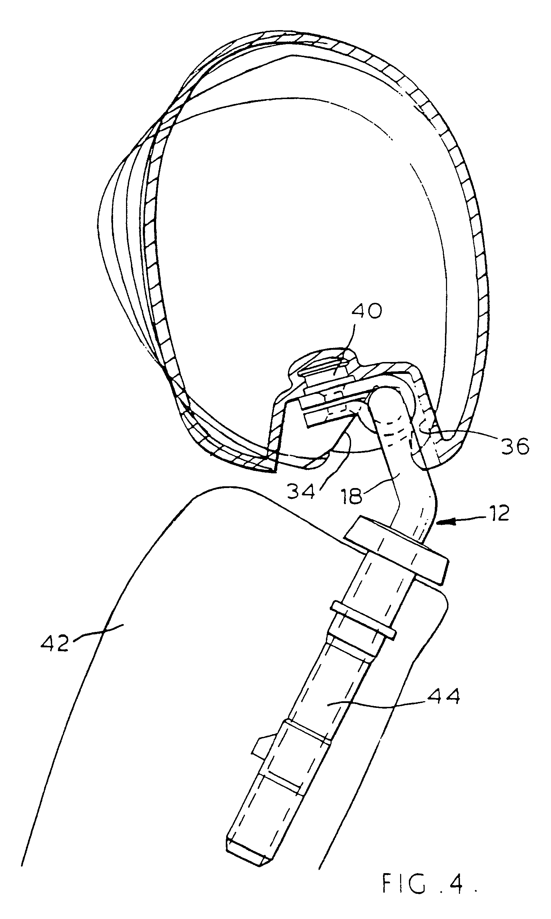

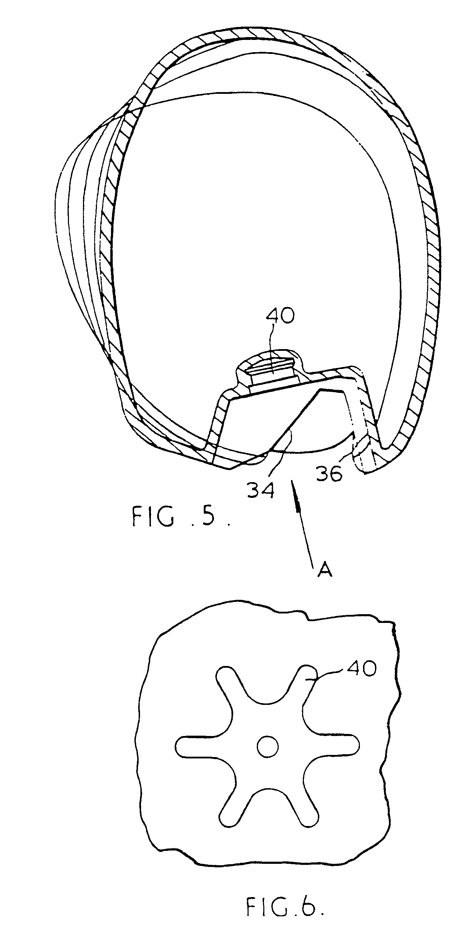

Figs 4 and 5 show a second embodiment where instead of a moulded-in P-clamp, merely an insert 40 is moulded into the plastics body. This insert has a threaded bore, and a separate P-clamp can be attached to this insert by a suitable bolt. To prevent the insert turning when a torque is applied as a screw is tightened, the insert has a star-shaped neck (Figure 6), and the plastics flows around the star shape during the moulding process.

Fig 4 shows the headrest in conjunction with a seat 42, and the frame 12 is height-adjustable in the seat back 42 by use of a conventional height-adjustment mechanism 44 coupled with grooves 46 (see Fig. 1) cut in the stems of the support frame 12.

In Figs. 4 and 5, contour lines show the shape of the plastics body which can be achieved through a blow moulding process. This shape is designed so that the ends of the body are fatter than the middle, to locate the head centrally. Furthermore, the contour of the body is designed so that when a seat occupant moves vertically (as happens in a crash) the head and neck are able to move smoothly both up and down over the headrest.

## Claims

1. A headrest for use with a motor vehicle seat, the headrest comprising a plastics body (10) including a mounting insert (26) mounted into a recess (14) of the body, a support frame (12), at least one friction clamp (24) adapted to hold the body (10) relative to the frame (12) whilst allowing the insert and the body to tilt to an extent limited by walls of the recess (14), and the body (10) being covered with a layer of covering material (22), characterised in that the plastics body (10) is a blow-moulded body forming a continuous envelope bounding an enclosed cavity with the mounting insert (26, 40) moulded into the recess (14) which is arranged in the wall of the lower face of the body.

2. A headrest as claimed in Claim 1, wherein the support frame (12) is made of rod or bar suitably bent to shape.

3. A headrest as claimed in Claim 1 or Claim 2, wherein there are two moulded-in inserts (26) and two friction clamps (24).

4. A headrest as claimed in any one of Claims 1 to 3, wherein the friction clamps (24) are themselves moulded in to the wall of the plastics body.

5. A headrest as claimed in any one of Claims 1 to 3, wherein the insert (40) has a threaded bore, and the clamps (24) are secured to the inserts by threaded fasteners.

6. A headrest as claimed in any preceding claim, wherein the recess (14) has faces (34, 36) which make an angle of between 50° and 60° to one another, to limit the available tilting movement of the body (10) on the frame (12).

7. A headrest as claimed in any preceding claim, wherein the plastics body in blown from a parison which is pre-coated with an adhesive coating, so that the layer of foam or other covering material (22) can be secured to the outer surface of the body after moulding.

8. A headrest as claimed in any one of Claims 1 to 6, wherein the plastics body is blown from a parison formulated from mixture of plastics material and adhesive.

9. A headrest as claimed in any preceding clam, wherein the blow-moulded body is generally cylindrical in form and the frame supports the body with its longitudinal axis horizontal.

## Ansprüche

1. Kopfstütze zum Gebrauch mit einem Kraftfahrzeugsitz, wobei die Kopfstütze einen Kunststoffkörper (10) mit einem in einer Ausnehmung (14) des Körpers montierten Montageeinsatz (26), einem Stützrahmen (12) und mindestens einer Reibklemme (24) umfaßt, die den Körper (10) bezüglich des Rahmens (12) festhält, während sie gleichzeitig dem Einsatz und dem Körper ein Kippen in einem von Wänden der Ausnehmung (14) begrenzten Ausmaß gestattet, wobei der Körper (10) mit einer Schicht eines Beschichtungsmaterials (22) beschichtet ist, dadurch gekennzeichnet, daß es sich bei dem Kunststoffkörper (10) um einen blasgeformten Körper handelt, der eine durchgehende, einen abgeschlossenen Hohlraum begrenzende Umhüllung bildet, wobei der Montageeinsatz (26, 40) in die in der Wand der Unterseite des Körpers angeordnete Ausnehmung (14) eingeformt ist.

2. Kopfstütze nach Anspruch 1, bei der der Stützrahmen (12) aus einem in eine geeignete Form gebogenen Stab bzw. aus einer solchen Stange besteht.

3. Kopfstütze nach Anspruch 1 oder 2, die zwei eingeformte Einsätze (26)- und zwei Reibklemmen (24) aufweist.

4. Kopfstütze nach einem der Ansprüche 1 bis 3, bei der die Reibklemmen (24) ihrerseits in die Wand des Kunststoffkörpers eingeformt sind.

5. Kopfstütze nach einem der Ansprüche 1 bis 3, bei der der Einsatz (40) eine Gewindebohrung aufweist und die Klemmen (24) durch mit Gewinden versehenen Haltern an den Einsätzen befestigt sind.

6. Kopfstütze nach einem der vorhergehenden Ansprüche, bei der die Ausnehmung (14) Seiten (34, 36) aufweist, die zur Begrenzung der zur Verfügung stehenden Kippbewegung des Körpers (10) am Rahmen (12) einen Winkel zwischen 50° und 60° einnehmen.

7. Kopfstütze nach einem der vorhergehenden Ansprüche, bei der der Kunststoffkörper (10) aus einem Blasrohling geblasen wird, der mit einer Klebebeschichtung vorbeschichtet ist, so daß die Schicht aus Schaum oder einem anderen Beschichtungsmaterial (22) nach dem Formen an der äußeren Oberfläche des Körpers befestigt werden kann.

8. Kopfstütze nach einem der Ansprüche 1 bis 6, bei der der Kunststoffkörper (10) aus einem Blasrohling aus einer Kunststoffmaterial- und Klebstoffmischungsformulierung geblasen wird.

9. Kopfstütze nach einem der vorhergehenden Ansprüche, bei der der blasgeformte Körper (10) eine allgemein zylindrische Form hat und der Rahmen (12) den Körper so stützt, daß seine Längsachse horizontal liegt.

## Revendications

1. Appuie-tête destiné à être utilisé avec un siège de véhicule à moteur, l'appuie-tête comprenant un corps (10) en matière plastique, renfermant une pièce prisonnière de montage (26) introduite dans un évidement (14) du corps ; un cadre de support (12) ; au moins un crampon à frottement (24) conçu pour retenir le corps (10) par rapport au cadre (12), tout en autorisant un basculement de la pièce prisonnière et du corps, d'une distance limitée par des parois de l'évidement (14) ; et le corps (10) étant recouvert d'une couche d'un matériau de revêtement (22), caractérisé par le fait que le corps (10) en matière plastique est un corps moulé par soufflage formant une enveloppe ininterrompue délimitant une cavité fermée, la pièce prisonnière de montage (26, 40) étant intégrée par moulage dans l'évidement (14) qui est ménagé dans la paroi de la face inférieure du corps.

2. Appuie-tête selon la revendication 1, dans lequel le cadre de support (12) est constitué d'une tige ou d'une barre adéquatement mise en forme par cintrage.

3. Appuie-tête selon la revendication 1 ou la revendication 2, comprenant deux pièces prisonnières (26) intégrées par moulage et deux crampons à frottement (24).

4. Appuie-tête selon l'une quelconque des revendications 1 à 3, dans lequel les crampons à frottement (24) sont eux-mêmes intégrés par moulage dans la paroi du corps en matière plastique.

5. Appuie-tête selon l'une quelconque des revendications 1 à 3, dans lequel la pièce prisonnière (40) présente un perçage taraudé, et les crampons (24) sont assujettis aux pièces prisonnières par des organes filetés de fixation.

6. Appuie-tête selon une quelconque revendication précédente, dans lequel l'évidement (14) possède des faces (34, 36) qui forment mutuellement un angle compris entre 50° et 60°, afin de limiter le mouvement de basculement admissible du corps (10) sur le cadre (12).

7. Appuie-tête selon une quelconque revendication précédente, dans lequel le corps (10) en matière plastique est soufflé à partir d'une paraison qui est préalablement revêtue d'un revêtement adhésif, de telle sorte que la couche de mousse ou d'autre matériau de revêtement (22) puisse, après le moulage, être assujettie à la surface externe du corps.

8. Appuie-tête selon l'une quelconque des revendications 1 à 6, dans lequel le corps (10) en matière plastique est soufflé à partir d'une paraison élaborée à base d'un mélange de matière plastique et d'adhésif.

9. Appuie-tête selon une quelconque revendication précédente, dans lequel le corps (10) moulé par soufflage est de configuration globalement cylindrique, et le cadre (12) supporte le corps de façon que son axe longitudinal soit horizontal.

FIG. 2.

FIG. 3.

FIG. 1.

FIG .4 .

FIG .5 .

FIG.6.